# EUROPEAN PATENT SPECIFICATION

(11) **EP 3 348 681 B1**
(45) Date of publication and mention of the grant of the patent: **15.05.2019**
(21) Application number: 16843952.9
(22) Date of filing: 07.09.2016
(51) Int. Cl.: D01F 6/62, B60C 9/00, D02G 3/48, D01D 5/16

(54) **FIBER FOR TIRE, RUBBER/FIBER COMPLEX, AND TIRE**
FASER FÜR REIFEN, KAUTSCHUK/FASER-KOMPLEX UND REIFEN
FIBRE POUR PNEU, COMPLEXE DE CAOUTCHOUC/FIBRE ET PNEU

(30) Priority: 08.09.2015 JP 2015177016
(43) Date of publication of application: 18.07.2018
(73) Proprietor: Bridgestone Corporation, Tokyo 104-8340 (JP); Synvina C.V., 1014 BV Amsterdam (NL)
(72) Inventor: IKEDA, Yuji, Tokyo 104-8340 (JP); SUGIMOTO, Kenichi, Tokyo 104-8340 (JP); NAKAJIMA, Hajime, 1014 BV Amsterdam (NL)
(74) Representative: Oxley, Robin John George
(86) International application number: PCT/JP2016/004089
(87) International publication number: WO 2017/043085

(56) References cited:
- WO-A1-2013/149222
- WO-A1-2014/204313
- WO-A1-2014/204313
- WO-A1-2015/105104
- JP-A- S6 147 816
- JP-A- H01 162 820
- JP-A- H04 119 119
- JP-A- H06 184 819
- JP-A- S62 162 016
- JP-A- 2010 163 724
- JP-A- 2014 111 852
- JP-A- 2015 518 093
- KR-A- 20120 072 860
- Roop S. Bhakuni ET AL: "Tire Cord", Kirk-Othmer Encyclopedia of Chemical Technology, 4 December 2000 (2000-12-04), XP055472079, Retrieved from the Internet: URL:https://onlinelibrary.wiley.com/doi/pd f/10.1002/0471238961.2009180502080111.a01 [retrieved on 2018-05-03]
- KINZO ISHIKAWA ET AL. KAGAKU SEN'I I 20 March 1970, pages 167 - 181, XP009504845

## Description

### TECHNICAL FIELD

The present disclosure relates to a tire fiber, a rubber/fiber composite, and a tire.

### BACKGROUND

Synthetic fibers made of nylon or polyethylene terephthalate (PET) have been widely used as fibers used for reinforcing cords etc. of tires. However, these synthetic fibers impose a large environmental burden because they are produced from raw materials of fossil origin.

This has led to recent development of fibers produced from raw materials of natural origin for use as fibers with a small environmental burden. For example, PTL 1 discloses a fiber made of polyethylene-2,5-furandicarboxylate (PEF) (PEF fiber).

### CITATION LIST

### Patent Literature

PTL 1: WO2014/204313

### SUMMARY

### (Technical Problem)

PTL 1 discloses a PEF raw yarn produced by two-stage spinning/drawing.

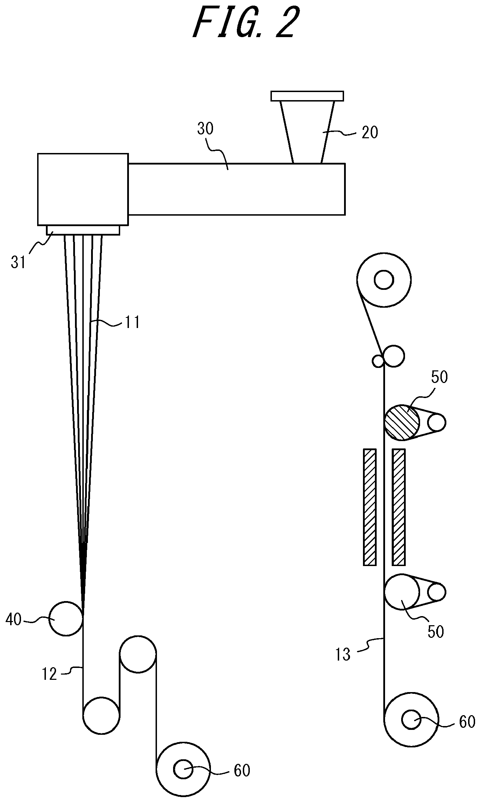

Referring to FIG. 2, two-stage spinning/drawing will be described. In the two-stage spinning/drawing process, a PEF-containing resin composition is extruded through a die 31 of an extruder 30 into filaments 11, which are then coated with an oil agent by means of an oiling roller 40, bundled into an undrawn yarn 12, and recovered by being once taken up by a take-up machine 60. Subsequently, the recovered undrawn yarn 12 is drawn by drawing rollers 50, and a drawn PEF raw yarn 13 is taken up by the take-up machine 60.

However, PEF raw yarns obtained by the two-stage spinning/drawing process are insufficient in modulus of elasticity and also pose a problem of reduced tire uniformity when used in tire fibers, which require a high modulus of elasticity. Thus, further improvements have been required in tire fibers that comprise the conventional PEF raw yarn.

An object of the present disclosure is therefore to provide a tire fiber that provides favorable tire uniformity when applied to a tire. Another object of the present disclosure is to provide a rubber/fiber composite that provides favorable tire uniformity when applied to a tire. A further object of the present disclosure is to provide a tire having favorable uniformity.

### (Solution to Problem)

Namely, the disclosed tire fiber is directed to a tire fiber that comprises a polyethylene-2,5-furandicarboxylate (PEF) raw yarn, wherein the PEF raw yarn is obtained by continuously drawing, without recovering, an undrawn yarn obtained by melt-spinning of a PEF-containing resin composition, and wherein the PEF raw yarn has a storage modulus of 1,300 MPa or more.

The disclosed tire fiber provides favorable tire uniformity when applied to a tire.

In regard to the disclosed tire fiber, the PEF raw yarn preferably has a storage modulus of 1,500 MPa or more.

With this configuration, tire uniformity can be further improved.

In regard to the disclosed tire fiber, the PEF raw yarn preferably has a storage modulus of 2,500 MPa or more.

With this configuration, tire uniformity can be further improved.

In regard to the disclosed tire fiber, a PEF in the resin composition preferably has an intrinsic viscosity of 0.5 to 1.5 dl/g.

With this configuration, tire uniformity can be further improved.

The disclosed rubber/fiber composite is characterized by including the tire fiber.

The disclosed rubber/fiber composite provides favorable tire uniformity when applied to a tire.

The disclosed tire is characterized by including the rubber/fiber composite.

The disclosed tire has favorable uniformity.

### (Advantageous Effect)

According to the present disclosure, it is possible to provide a tire fiber that provides favorable tire uniformity when applied to a tire. According to the present disclosure, it is also possible to provide a rubber/fiber composite that provides favorable tire uniformity when applied to a tire. Further, according to the present disclosure, it is possible to provide a tire having favorable uniformity.

### BRIEF DESCRIPTION OF THE DRAWINGS

In the accompanying drawings:
FIG. 1 is a schematic view for explaining an example of a method for producing a PEF raw yarn used for the disclosed tire fiber; and
FIG. 2 is a schematic view for explaining an example of a conventional PEF raw yarn production method.

### DETAILED DESCRIPTION

The present disclosure will now be described in detail by way of embodiments.

### [Tire Fiber]

The disclosed tire fiber comprises at least a polyethylene-2,5-furandicarboxylate (PEF) raw yarn and optionally other raw yarn(s) where necessary.

The tire fiber can be produced by spinning two or more PEF raw yarns, or one or more PEF raw yarns and one or more other raw yarns. The twist number when twisting the raw yarn is not particularly limited and can be appropriately selected according to the purpose. Further, one single PEF raw fiber can be used as the tire fiber.

The disclosed tire fiber used is applicable to a tire cord (e.g., a carcass cord, a belt cord).

### <PEF raw yarn>

The PEF raw yarn included in the disclosed tire fiber needs to be a PEF raw yarn which is obtained by continuously drawing, without recovering, an undrawn yarn obtained by melt-spinning of a PEF-containing resin composition.

Further, the PEF raw yarn included in the disclosed tire fiber needs to have a storage modulus of 1,300 MPa or more.

When the disclosed tire fiber is applied to a tire, the tire has favorable uniformity.

### «Resin Composition»

The resin composition comprises PEF as a raw material and optionally other component(s) where necessary.

### -PEF Included in Resin Composition-

PEF included in the PEF composition is a polymer that comprises a building block represented by the following general formula, which is obtainable by polycondensation of monomer components including at least furan-2,5-dicarboxylic acid and ethylene glycol in the presence of a polymerization catalyst. One or two or more different types of PEF may be used in the PEF composition.

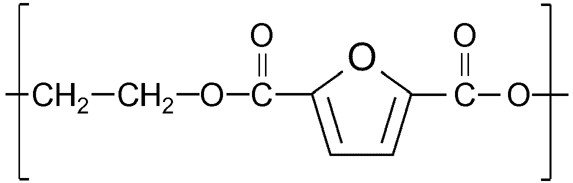

### --Monomer Components--

Examples of the furan-2,5-dicarboxylic acid include furan-2,5-dicarboxylic acids produced from cellulose, glucose or other plant material (biomass) using methods known in the art. The furan-2,5-dicarboxylic acid used in this reaction may be a furan-2,5-diester compound esterified with, for example, methanol or ethanol.

Examples of the ethylene glycol include ethylene glycol and the like produced from bioethanol using methods known in the art.

The monomer components may further include, for example, terephthalic acid, 2,6-naphthalenedicarboxylic acid, propanediol and butanediol, in addition to furan-2,5-dicarboxylic acid and ethylene glycol. From the perspective of more improved storage modulus of the PEF raw yarn, however, it is preferred that the monomer components are only furan-2,5-dicarboxylic acid and ethylene glycol.

The mole ratio of furan-2,5-dicarboxylic acid to ethylene glycol (furan-2,5-dicarboxylic acid/ethylene glycol) in the monomer components is not particularly limited and can be appropriately selected according to the purpose; it preferably 1/3 to 1/1, and more preferably 1/2.5 to 1/1.5.

A mole ratio of 1/3 or more results in improved adhesion between the PEF raw yarn and adhesive, so that PEF with a high molecular weight can be obtained. A mole ratio of 1/1 or less results in the PEF having a terminal carboxylic acid amount that falls within a suitable range, so that polymer degradation during or after the production process can be limited.

### -Terminal Carboxylic Acid Amount of PEF-

The terminal carboxylic acid amount of the PEF is preferably 1 to 100 mmol/g, and more preferably 5 to 50 mmol/g. When the terminal carboxylic acid amount is 1 mmol/g or more, the number of reaction sites on PEF at the time when it reacts with adhesives used upon formation of a composite with another member (e.g., tire rubber component) increases, so that the PEF shows increased adhesion with adhesives (e.g., epoxy resin-based adhesives). When the terminal carboxylic acid amount is 100 mmol/g or less, a high tenacity of the PEF raw yarn can be ensured even when it is subjected to high-temperature treatment (e.g., vulcanization of tire).

The terminal carboxylic acid amount can be adjusted for example by changing the proportions of furandicarboxylic acid and ethylene glycol upon polycondensation or the molecular weight of PEF.

The terminal carboxylic acid amount refers to terminal carboxylic group content in mmol per g of PEF which can be measured by the method described below.

2 g of PEF is dissolved in 50 mL of a 4:6 (weight ratio) mixed solution of phenol and trichloroethylene at 80°C and titrated with a mixed solution of 0.05N KOH and methanol to measure the terminal carboxyl group concentration (mmol/g). Phenol red is used as an indicator for titration, and the time point where the phenol red turned rose pink from yellowish green is regarded as the end point of titration.

### --Molecular Weight of PEF--

The number average molecular weight (Mn) of the PEF is not particularly limited and can be appropriately selected according to the purpose; it is preferably 22,000 to 100,000, and more preferably 26,000 to 75,000.

When the number average molecular weight is 22,000 or more, the tenacity of the obtained PEF raw yarn increases, and when it is 100,000 or less, a desired terminal carboxylic acid amount is easily ensured. A number average molecular weight that falls within the more preferred range is advantageous for the same reason.

The weight average molecular weight (Mw) of the PEF is not particularly limited and can be selected according to the purpose; it is preferably 55,000 to 200,000, more preferably 62,000 to 180,000, and even more preferably 65,000 to 150,000.

When the weight average molecular weight of PEF is 55,000 or more, the tenacity of the resulting PEF raw yarn increases, and when it is 200,000 or less, the melt viscosity of resin decreases, so that the extrusion pressure decreases and therefore spinning can be more easily carried out. A weight average molecular weight that falls within the more preferred range is more advantageous for the same reason.

Number average molecular weight and weight average molecular weight refer to values measured by GPC with polystyrene as a standard.

### --Intrinsic Viscosity of PEF--

The intrinsic viscosity of the PEF is not particularly limited and can be appropriately selected according to the purpose; it is preferably 0.50 to 1.50 dl/g, and more preferably 0.70 to 1.10 dl/g.

When the intrinsic viscosity is 0.50 dl/g or more, the tenacity of the resulting PEF raw yarn increases, and when it is 1.50 dl/g or less, melt-spinning can be easily performed. An intrinsic viscosity that falls within the more preferred range is more advantageous for the same reason.

As used herein, "intrinsic viscosity" refers to a value measured by the method described in (Intrinsic Viscosity) in the section [Evaluations] described later.

### -PEF Production Method-

The PEF can be produced for example through a first step wherein an ester compound is obtained by reacting monomer components including furan-2,5-dicarboxylic acid with ethylene glycol, and a second step wherein the ester compound is polycondensed in the presence of a polymerization catalyst. In the second step, when polycondensation is carried out under a reduced pressure of 5 to 700 Pa, the polycondensation reaction rate for obtaining PEF can be increased.

PET is a synthetic resin containing terephthalic acid synthesized from raw materials of fossil origin and imposes a large environmental burden. On the other hand, for PEF, the raw material furan-2,5-dicarboxylic acid can be produced from cellulose, glucose or other material of biological origin such as plant and the raw material ethylene glycol can be produced from bioethanol. Thus, PEF imposes a smaller environmental burden than PET in that PEF can be prepared from bio-based sources.

### -Other Components-

Other components that may be optionally included in the resin composition where necessary are not particularly limited and can be appropriately selected according to the purpose. Examples thereof include resins such as polyamides (e.g., nylon), polyesters (e.g., polyethylene terephthalate, polyethylene naphthalate, polytrimethylene terephthalate (PTT), polybutylene terephthalate (PBT), polytrimethylene furanoate (PTF), polybutylene furanoate (PBF), and polylactic acid), polyolefins (e.g., polypropylene and polyethylene), and polyvinylidene chloride; antioxidants; ultraviolet absorbers; light stabilizers; lubricants; antistatic agents; fillers; crosslinking agents; and nucleating agents. These components may be used alone or in combination.

From the perspective of reducing the environmental burden, the PEF content in the resin composition is preferably 75% by mass or more, and more preferably 100% by mass, based on the total amount (100% by mass) of the PEF composition.

Further, from the perspective of reducing the environmental burden, the PEF content in the resin composition is preferably 80% by mass or more, and more preferably 100% by mass, based on the total amount (100% by mass) of all the resin components contained in the resin composition.

### «PEF Raw Yarn Production Method»

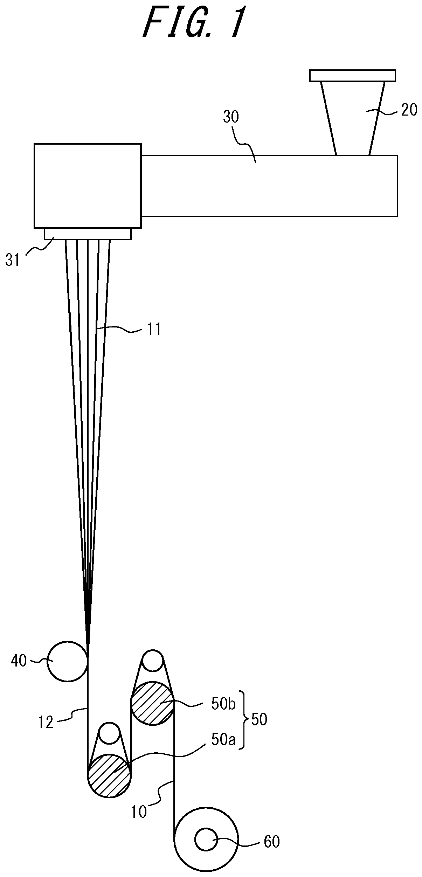

The PEF raw yarn can produced by, as illustrated in FIG. 1, a single-stage spinning/drawing process wherein an undrawn yarn 12, obtained by melt-spinning of a PEF-containing resin composition, is continuously drawn without being recovered to form a PEF raw yarn 10 and the PEF raw yarn 10 is taken up.

In the single-stage spinning/drawing process, PEF raw yarns can be efficiently produced in short time without incurring cost increase because a PEF raw yarn is produced through a sequence of steps without taking up a melt-spun undrawn yarn along the way. Further, the single-stage spinning/drawing process enables drawing at high draw ratio as the drawing step is carried out before the microstructure of the undrawn yarn 12, obtained by melt-spinning of the resin composition, changes and stabilizes over time. Thus, a PEF raw yarn 10 having a high storage modulus can be obtained.

As used herein, "storage modulus" refers to a value measured by the method described in (storage modulus) in the section [Evaluations] described later.

In the conventional PEF raw yarn production method, as illustrated in FIG. 2, the undrawn yarn 12 obtained by the melt-spinning is recovered once and therefore the structure of the recovered undrawn yarn 12 changes and stabilizes over time before being drawn. Because undrawn yarns with stabilized structure cannot be drawn at high draw ratio, it is difficult to obtain PEF raw yarns having a high storage modulus.

### -Melt-Spinning-

The melt-spinning is to obtain an undrawn yarn by melting treatment and spinning treatment.

The melting treatment refers to a treatment wherein the resin composition is melted by mixing under heating. In the melting treatment, for example, as illustrated in FIG. 1, the resin composition is charged into a hopper 20 and mixed under heating.

The spinning treatment is to extrude the resin composition melted in the melting treatment into filaments and bundle the extruded filaments into an undrawn yarn. In the spinning treatment, for example, as illustrated in FIG. 1, the melted resin composition is extruded through a die 31 of an extruder 30 into filaments 11 and the filaments 11 are coated with an oil agent by means of an oiling roller 40 and then bundled into an undrawn raw yarn 12. In the spinning treatment, the filaments 11 may be subjected to a so-called interlacing process where the filaments 11 are entangled using air.

The extrusion temperature during the melt-spinning is preferably from 230°C to 320°C, and more preferably from 270°C to 300°C, from the perspective of maintaining the PEF composition in a molten state to ensure a viscosity that allows for easy discharge. When the extrusion temperature is 230°C or above, spinning can be easily performed, and when the extrusion temperature is 320°C or below, a PEF raw fiber with high tenacity can be obtained. The extrusion temperature is preferably 20°C to 110°C higher than the melting point of PEF.

The extrusion temperature refers to a temperature of the die 31 of the extruder 30.

The rate (E) at which the PEF composition is extruded into filaments during the melt-spinning is preferably 1 to 30 m/min.

The rate at which the PEF composition is extruded into filaments during the melt-spinning (extrusion rate) refers to a rate at which the filaments 11 are discharged from the die 31 of the extruder 30.

As illustrated in FIG. 1, the extruder 30 used in the melt-spinning is a device having at least one die 31.

The hole size (die hole diameter) (D) of the die 31 of the extruder 30 is preferably 0.1 to 3.0 mm. When the die hole diameter is 0.1 mm or more, spinning can be easily performed, and when it is 3.0 mm or less, a PEF raw yarn with high strength can be obtained.

The ratio of the length (L, unit: mm) of the channel of the die 31 to the die hole diameter (D, unit: mm) (L/D) is preferably 1 to 5.

Examples of oil agents applied by the oiling roller 40 include, from the perspective of facilitating the bundling of the filaments, silicone oil-based agents, fatty acid ester-based oil agents, higher alcohol-based oil agents, higher fatty acid-based oil agents, sulfuric acid ester-based oil agents, sulfonic acid-based oil agents, phosphoric acid ester-based oil agents, ether derivative-based oil agents, ester derivative-based oil agents, tertiary cation-based oil agents, quaternary cation-based surfactants, paraffins, and mineral oils.

### -Drawing-

The drawing is to obtain a PEF raw yarn by drawing treatment.

The drawing treatment is to draw the undrawn yarn obtained by the melt-spinning. In the drawing treatment, for example, as illustrated in FIG. 1, the undrawn yarn 12 obtained by the melt-spinning is continuously drawn by drawing rollers 50 without being recovered.

The drawing can be carried out, for example, as illustrated in FIG. 1, using two or more drawing rollers 50 (drawing rollers 50a, 50b in the example of FIG. 1) operated at different rotation speeds (e.g., the downstream drawing roller 50b is rotated faster than the upstream drawing roller 50a). Alternatively or in addition, the undrawn yarn can be drawn by making the take-up rate (later described) faster than the extrusion rate.

It is advantageous to carry out the drawing while heating the drawing rollers to a temperature higher than the glass-transition temperature (Tg) of resin because a PEF raw yarn having a higher storage modulus can be obtained and drawing can be carried out efficiently.

The draw ratio in the drawing step is preferably greater than 6.0 to 10.0, and more preferably 6.5 to 10.0. A draw ratio of greater than 6.0 results in the resultant PEF raw yarn having a higher storage modulus, and a draw ratio of 10.0 or less results in improved productivity.

The draw ratio refers to a ratio of the length of an undrawn yarn prior to drawing to the length of the drawn yarn after drawing. When the drawing is carried out using the drawing rollers 50a, 50b as illustrated in FIG. 1, the draw ratio can be adjusted for example by differentiating the rotation speeds of the drawing rollers 50a, 50b.

The temperature of the undrawn yarn during the drawing step is preferably greater than 80°C to 180°C from the perspective of improved strength of the resulting PEF raw yarn. When the temperature is 80°C or below, the molecules show poor mobility and cannot be easily aligned. When the temperature is above 180°C, the molecules flow and cannot be easily aligned.

### -Take-up -

The take-up is to subject the PET raw yarn to take-up treatment.

The take-up treatment is to take-up the PEF raw yarn obtained by the drawing. The take-up is, for example, as illustrated in FIG. 1, a treatment wherein the PEF raw yarn 10 obtained by drawing is taken up by the take-up machine 60.

The take-up rate (T) during the take-up step is preferably 50 to 8,000 m/min.

The ratio of the rate (T, unit: m/min) of taking up the PEF raw yarn during the take-up to the rate (E, unit: m/min) of extrusion during the melt-spinning (T/E; hereinafter also referred to as "spin draft") is preferably 700 to 2,000, and more preferably 1,400 to 2,000. When the spin draft is 700 or more, the resultant PEF raw yarn has a higher storage modulus. When the spin draft is 2,000 or less, spinning can be easily carried out resulting in improved productivity.

### «Physical Properties of PEF Raw Yarn»

The storage modulus of the PEF raw yarn needs to be 1,300 MPa or more, preferably 1,500 to 5,000 MPa, and more preferably 2,500 MPa or more.

When the storage modulus is 1,300 MPa or more, a tire having the PEF raw yarn has favorable uniformity.

The filaments constituting the PEF raw yarn preferably have a fineness (line density) per filament of 0.05 to 5.0 tex, more preferably greater than 0.2 to 3.0 tex, and even more preferably 0.2 to 2.0 tex, from the perspective that a tire fiber with superior physical properties are obtainable.

As used herein, fineness refers to a value measured by the method described in (Fineness) in the section [Evaluations] described later.

The tenacity of the PEF raw yarn is preferably 3.0 cN/dtex or more. Tenacity can be adjusted by changing the orientation or degree of crystallinity of the resin in the PEF raw yarn, for example by changing the draw ratio.

As used herein, tenacity refers to a value obtained by dividing the breaking tenacity of a PEF raw yarn pre-twisted 4 turns per 10 cm, measured in a tensile test at 25°C and 55% RH using a tensile tester, by the fineness of the raw yarn used in the tensile test.

The degree of crystallinity of the PEF raw yarn is preferably 10% or more. When the degree of crystallization is 10% or more, the orientation of the PEF raw yarn to the tensile direction is superior and thus the tenacity of the PEF raw yarn increases. Further, the storage modulus of the PEF raw yarn further increases.

Herein, the degree of crystallinity refers to a value measured using an X-ray diffractometer.

### <Other yarns>

Other raw yarns that may be included in the disclosed tire fiber are not particularly limited and can be appropriately selected according to the purpose. Examples thereof include polyamide raw yarns such as nylon raw yarn; polyester raw yarns such as PET raw yarn and PEN raw yarn; and rayon yarns. These yarns may be used alone or in combination.

A plurality of fibers including the disclosed tire fiber can be twisted together to form a tire cord. The tire cord may have a single-twist structure of the disclosed tire fiber or may have a layer- or multiple-twist structure of a plurality of fibers including a tire fiber that comprises the PEF raw yarn. Examples of fibers other than the tire fiber that comprises the PEF raw yarn used for layer- or multiple-twist structure include metal fibers such as steel fiber, resin fibers such as PET fiber, and glass fibers.

### [Rubber/Fiber Composite]

The disclosed rubber/fiber composite comprises the disclosed tire fiber, and examples thereof include, for example, composites wherein the disclosed tire fiber and rubber are adhered together with an adhesive. The disclosed rubber/fiber composite is a composite of rubber and fiber, where an adhesive layer and a rubber layer are laminated around the tire fiber that comprises the PEF raw yarn (or tire cord that comprises the PEF raw yarn).

The disclosed rubber/fiber composite has improved adhesion between rubber and fiber.

The disclosed rubber/fiber composite can be used for example as a carcass, belt, bead wire, insert, flipper, side reinforcement etc. of a tire.

Upon production of the disclosed rubber/fiber composite, adhesion of a tire fiber and a rubber component can be effected after performing dipping treatment known in the art wherein the tire fiber (or tire cord manufactured by twisting the tire fiber) is heated by being dipped in adhesive-containing liquid.

The adhesive used in the dipping treatment is not particularly limited and can be appropriately selected depending on the purpose. Examples thereof include thermoplastic polymers, thermally reactive aqueous urethane resins, epoxide compounds, and resorcinol-formalin-latex-based adhesives. These adhesives may be used alone or in combination.

### [Tire]

The disclosed tire comprises the disclosed tire fiber.

The disclosed tire has favorable uniformity as well as superior high-speed durability due to the inclusion of the PEF raw yarn having a high storage modulus.

### EXAMPLES

The present disclosure will now be described in detailed based on Examples, which however shall not be construed as limiting the scope of the present disclosure.

### (Example 1)

A PEF composition consisting only of 100% biobased PEF with a Mw of 75,600 and an intrinsic viscosity of 0.76 dl/g was melt-spun by passing it through a 96-hole die at an extrusion temperature of 275°C and the resultant 96 filaments were bundled into an undrawn yarn, which was continuously drawn without being recovered and then taken up to afford a PEF raw yarn having a fineness of 1,100 dtex (11.5 dtex per filament). The spin draft and draw ratio were as set forth in Table 1 and the time from the completion of extrusion of the filaments in the spinning step to the start of drawing of the undrawn yarn was not longer than 10 seconds.

First and second twists of two raw yarns of PEF thus obtained were twisted together at a twist number of 47 turns per 10 cm length to produce a tire fiber with a construction having a fineness of 1,100 dtex/2, twist number of 47 × 47 (turns per 10 cm) and fiber count of 60 per 5 cm.

### (Examples 2 to 4 and Comparative Example 1)

Tire fibers were obtained as in Example 1 except that the conditions of spin draft and draw ratio were changed.

### (Example 5)

A tire fiber was obtained as in Example 1 except that 100% biobased PEF having an intrinsic viscosity of 1.10 dl/g was used and that extrusion temperature was set to 310°C.

### (Example 6)

A tire fiber was obtained as in Example 1 except that 100% biobased PEF having an intrinsic viscosity of 0.40 dl/g was used.

### [Evaluations]

The PEFs and PEF raw yarns used in Examples and Comparative Examples and the tire fibers obtained in Examples and Comparative Examples were subjected to measurements described below.

### (Intrinsic Viscosity)

According to the method in compliance with ASTM D4603, an intrinsic viscosity of PEF was measured using a 4:6 (weight ratio) mixture of phenol and trichloroethylene as solvent.

### (Storage Modulus)

One filament was taken out from the PEF raw yarn and measured for storage modulus (MPa) under the following measurement conditions using a dynamic viscoelasticity meter:
Initial strain: 1%
Amplitude: 0.1%
Frequency: 10 Hz
Temperature: 25°C

### (Fineness)

1 m of PEF raw yarn was sampled, dried at 130°C for 30 min, left to cool to room temperature in a dried desiccator, and weighed. Fineness (dtex) was calculated with 1 g per 10,000 m defined as 1 dtex.

### (Uniformity)

The tire fiber obtained in each of Examples and Comparative Examples was treated with adhesive B described in WO2014/133174 in the same manner as that described in Examples of WO2014/133174 to provide a carcass ply. The carcass ply was used to manufacture a tire having a tire size of 195/65R15.

Using a balance machine tire balance was measured, and further, the tire was rotated at 12 rpm on a 1.6 m diameter drum to measure force variations of the tire and drum shaft. In this way the uniformity of each tire was measured. In this test, force variations of tire and drum shaft occur when the tire has non-uniformity in circumferential direction.

The results were evaluated with the uniformity of Example 6 indexed to 100. In Table 1 larger index values indicate superior uniformity.

### (High-Speed Durability)

Tires were manufactured as in the evaluation of uniformity described above.

Each tire was mounted on a specified rim, and a drum test was carried out at a specified internal pressure under a specified load. Starting from 120 km/h, the test speed was increased in increments of 10 km/h every 20 minutes, and the speed at which tire failure occurred was measured. The results were evaluated with the high-speed durability of Example 6 indexed to 100. In Table 1, larger index values indicate superior high-speed durability.

**Table 1**

| | | Ex. 1 | Ex. 2 | Ex. 3 | Ex. 4 | Ex. 5 | Ex. 6 | Comp. Ex. 1 |
|---|---|---|---|---|---|---|---|---|
| Production condition | PEF's intrinsic viscosity (dl/g) | 0.76 | 0.76 | 0.76 | 0.76 | 1.10 | 0.40 | 0.76 |
| | Spin draft | 1500 | 1500 | 700 | 2000 | 1500 | 1500 | 600 |
| | Draw ratio | 7.0 | 6.5 | 7.0 | 7.0 | 7.0 | 7.0 | 6.0 |
| PEF raw yarn | Storage modulus (MPa) | 2000 | 1500 | 1500 | 2500 | 2500 | 1300 | 1000 |
| | Fineness (dtex) | 1100 | 1100 | 1100 | 1100 | 1100 | 1100 | 1100 |
| Evaluations | Uniformity (index) | 110 | 105 | 105 | 115 | 115 | 100 | 90 |
| | High-speed durability (index) | 110 | 105 | 105 | 115 | 115 | 100 | 90 |

The tier fiber according to the present embodiment provides favorable tire uniformity when applied to a tire. The rubber/fiber composite according to the present embodiment provides favorable tire uniformity when applied to a tire. Further, the tire according to the present embodiment has favorable uniformity.

### REFERENCE SIGNS LIST

10 PEF raw yarn
11 Filament
12 Undrawn yarn
13 PEF raw yarn obtained by two-stage spinning/drawing
20 Hopper
30 Extruder
31 Die
40 Oiling roller
50 Drawing roller
50a Drawing roller
50b Drawing roller
60 Take-up machine

## Claims

1. A tire fiber comprising a polyethylene-2,5-furandicarboxylate (PEF) raw yarn,
wherein the PEF raw yarn is obtained by continuously drawing, without recovering, an undrawn yarn obtained by melt-spinning of a PEF-containing resin composition, and
wherein the PEF raw yarn has a storage modulus of 1,300 MPa or more.

2. The tire fiber according to claim 1, wherein the PEF raw yarn has a storage modulus of 1,500 MPa or more.

3. The tire fiber according to claim 1 or 2, wherein the PEF raw yarn has a storage modulus of 2,500 MPa or more.

4. The tire fiber according to any one of claims 1 to 3, wherein PEF in the resin composition has an intrinsic viscosity of 0.5 to 1.5 dl/g.

5. A rubber/fiber composite comprising the tire fiber according to any one of claims 1 to 4.

6. A tire comprising the tire fiber according to any one of claims 1 to 4.

## Patentansprüche

1. Reifenfaser, umfassend ein rohes Garn aus Polyethylen-2,5-furandicarboxylat (PEF),
wobei das rohe PEF-Garn durch ununterbrochenes Dehnen, ohne Rückgewinnen, eines nicht-gezogenen Garns erhalten wird, das durch Schmelzschleudern einer PEFenthaltenden Harzzusammensetzung erhalten wird, und
wobei das rohe PEF-Garn ein Speichermodul von 1300 MPa oder mehr aufweist.

2. Reifenfaser nach Anspruch 1, wobei das rohe PEF-Garn ein Speichermodul von 1500 MPa oder mehr aufweist.

3. Reifenfaser nach Anspruch 1 oder 2, wobei das rohe PEF-Garn ein Speichermodul von 2500 MPa oder mehr aufweist.

4. Reifenfaser nach einem der Ansprüche 1 bis 3, wobei PEF in der Harzzusammensetzung eine intrinsische Viskosität von 0,5 bis 1,5 dl/g aufweist.

5. Gummi/Faser-Gemisch, umfassend die Reifenfaser nach einem der Ansprüche 1 bis 4.

6. Reifen, umfassend die Reifenfaser nach einem der Ansprüche 1 bis 4.

## Revendications

1. Fibre de pneumatique comprenant un fil brut de polyéthylène-2,5-furandicarboxylate (PEF),
dans laquelle le fil brut de PEF est obtenu par étirage en continu, sans récupération, d'un fil non étiré obtenu par filage à l'état fondu d'une composition de résine contenant du PEF, et
dans laquelle le fil brut de PEF a un module de stockage de 1300 MPa ou plus.

2. Fibre de pneumatique selon la revendication 1, dans laquelle le fil brut de PEF a un module de stockage de 1500 MPa ou plus.

3. Fibre de pneumatique selon la revendication 1 ou 2, dans laquelle le fil brut de PEF a un module de stockage de 2500 MPa ou plus.

4. Fibre de pneumatique selon l'une quelconque des revendications 1 à 3, dans laquelle le PEF dans la composition de résine a une viscosité intrinsèque de 0,5 à 1,5 dl/g.

5. Un composite caoutchouc/fibre comprenant la fibre de pneumatique selon l'une quelconque des revendications 1 à 4.

6. Pneumatique comprenant la fibre de pneumatique selon l'une quelconque des revendications 1 à 4.
